# EUROPEAN PATENT APPLICATION

(11) **EP 4 778 861 A1**
(43) Date of publication of application: **22.07.2026**
(21) Application number: 25205768.2
(22) Date of filing: 30.09.2025
(51) Int. Cl.: B65G 17/32, B65B 41/14, B65G 21/20, B65H 20/16

(54) **PACKAGING APPARATUS COMPRISING A CHAIN CONVEYOR**

(30) Priority: 15.01.2025 IT 202500000537
(71) Applicant: G. Mondini SpA, 25033 Cologne (BS) (IT)
(72) Inventor: MONDINI, Paolo Carlo, 25033 Cologne BS (IT); CARMINATI, Graziano, 25030 Coccaglio BS (IT)
(74) Representative: Ponchiroli, Simone

(57) **Abstract**

A packaging apparatus (1) comprising a chain conveyor (3) which comprises a conveying chain (9) and a guiding unit (11), wherein the guiding unit: comprises a supporting member (19), an upper member (21) and a lower member (23) which delimit an upper guide (29) and a lower guide (35) along which the conveying chain is constrained when it travels along respectively a first stretch and a second stretch of a movement path; comprises a plurality of connecting elements (25); is mounted on a frame (5) by means of a plurality of spacers (27). The upper guide is laterally free of the plurality of connecting elements and of the plurality of spacers for at least 50% of a longitudinal extent of the first stretch. The lower guide is laterally free of the plurality of connecting elements and of the plurality of spacers for at least 50% of a longitudinal extent of the second stretch.

## Description

This invention relates to a packaging apparatus comprising a chain conveyor. In particular, this invention relates to a packaging apparatus comprising a chain conveyor which is configured to convey in use a sheet (which may even be configured as a web) of packaging material. Apparatuses of that type include for example apparatuses comprising, in addition to the chain conveyor, also thermoforming and/or sealing devices which, in use, use the sheet of packaging material supplied by the chain conveyor to make a container for packaging a product, or to make a package containing a product.

The general cleanliness of such apparatuses, and in particular of the chain conveyor, is directly influenced by the structure of the apparatus and of the chain conveyor: that structure may in particular more or less favour the build-up of dirt (at its surfaces), and may render any operations for cleaning the chain conveyor more or less easy. Therefore the structure of the apparatus is of particular importance where the sector for use of the apparatus requires high standards of cleanliness and hygiene (consider, for example, the food packaging sector).

In some prior art packaging apparatuses (see for example some embodiments described in EP 1816075, DE 102018110884, CN 210761569 U), the apparatus - and in particular the chain conveyor - has surfaces which are hardly or not at all accessible for cleaning means and which during operation are prone to the build-up of dirt.

In some prior art apparatuses (see for example what is described in EP 2762411), the chain conveyor can be disassembled in such a way as to improve its accessibility for cleaning operations, but has more complex construction and longer down times for disassembling and cleaning the apparatus.

Finally, there are prior art embodiments in which the chain conveyor has several openings on the outer side intended to allow access for cleaning, although this is limited. See for example the embodiment illustrated in Figure 5 of EP 1816075.

However, no prior art solution allows truly effective cleaning to be carried out. Therefore, the prior art has several disadvantages, and the technical purpose which forms the basis of this invention is to at least partly overcome them. In particular, the technical purpose of this invention is to obtain a packaging apparatus, comprising a chain conveyor, which has simple construction and is structured in such a way as to reduce the build-up of dirt and to facilitate cleaning operations at the chain conveyor.

The technical purpose is substantially achieved by a packaging apparatus, comprising a chain conveyor, in accordance with what is defined in independent claim 1.

Particular embodiments of this invention are defined in the corresponding dependent claims.

Further characteristics and the advantages of this invention will be more apparent from the detailed description of several preferred, non-limiting embodiments, of a packaging apparatus comprising a chain conveyor. Reference will be made to the schematic drawings of the accompanying drawings, in which:
- Figure 1 shows, in an axonometric view, part of an apparatus according to this invention in accordance with a first embodiment;
- Figure 2 shows, in an enlarged view, the detail II of Figure 1;
- Figure 3 shows, in an enlarged view, the detail III of Figure 1;
- Figure 4 shows, in an enlarged view, the detail IV of Figure 1;
- Figure 5 shows, in a front view, the part of an apparatus of Figure 1;
- Figure 6 shows, in an enlarged view, the detail VI of Figure 5;
- Figure 7 shows, in a front view, part of an apparatus according to this invention in accordance with a second embodiment;
- Figure 8 shows, in a front view, part of an apparatus according to this invention in accordance with a third embodiment;
- Figure 9 shows, in a front view, part of an apparatus according to this invention in accordance with a fourth embodiment.

The packaging apparatus, in the accompanying figures labelled with the reference number 1 in its entirety, comprises first the chain conveyor 3, which extends in length in a longitudinal direction which is horizontal (preferably) or oblique, and a frame 5 on which the chain conveyor 3 is mounted.

In this invention, the longitudinal direction and any other direction relative to the longitudinal direction (for example, a direction perpendicular or transversal to the longitudinal direction) are understood not in the sense of a line, but instead in the geometric sense of a direction shared by a bundle of parallel straight lines as in the case, for example, of a bundle of parallel straight lines positioned horizontally or as for example in the case of a bundle of parallel straight lines positioned vertically (where the straight lines of each bundle share the same direction).

The chain conveyor 3 is configured to convey in use a sheet of packaging material 7 - for example, a sheet of polymeric, cellulosic or laminated material
- mainly in the longitudinal direction: in some embodiments (such as for example those illustrated), the conveyor is configured to convey in use the sheet of packaging material 7 parallel to the longitudinal direction; in other embodiments, the conveyor is configured to feed in use the sheet of packaging material 7 as a whole in the longitudinal direction, however according to a trajectory which locally deviates from the longitudinal direction. The chain conveyor 3 may in some cases be configured to convey in use a sheet of packaging material 7 continuously unwound from a reel, or a plurality of successive individual sheets of packaging material 7.

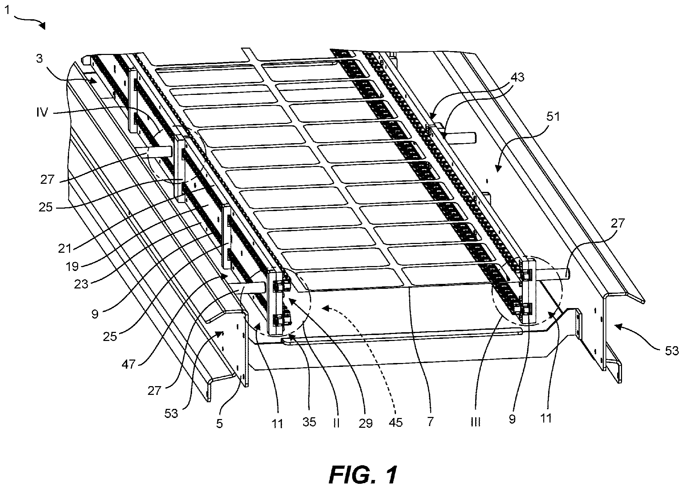

In some embodiments, the apparatus 1 also comprises a forming device (for example, a thermoforming device) and/or a sealing device to which the chain conveyor 3, in use, supplies at infeed the sheet of packaging material 7 for making a container for packaging a product, and/or for making a package containing a product. Figure 1, for example, shows a single sheet of packaging material 7 already used by such a device (notice the windows cut out of the sheet) and conveyed parallel to the longitudinal direction.

The chain conveyor 3 of the apparatus 1 comprises a conveying chain 9, a guiding unit 11 for the conveying chain 9, and a plurality of gripper devices 13 mounted on the conveying chain 9.

In some embodiments, the chain conveyor 3 comprises a plurality of conveying chains 9 and, for each conveying chain 9, a respective guiding unit 11 and a respective plurality of gripper devices 13; in such cases, advantageously, what is described below with reference to the conveying chain 9, to the guiding unit 11 and to the plurality of gripper devices 13 shall be considered specularly valid, where technically applicable, relative to each group composed of a conveying chain 9, of its respective guiding unit 11, and of its respective plurality of gripper devices 13. In some embodiments, the chain conveyor 3 comprises two of such groups (each composed of a respective conveying chain 9, a respective guiding unit 11 and a respective plurality of gripper devices 13) substantially specular to each other relative to a vertical plane of symmetry of the chain conveyor 3 (for example this is the case of the embodiments illustrated).

As already said, the chain conveyor 3 comprises a conveying chain 9 (advantageously a roller chain as illustrated in the accompanying figures), having an active side 15 and an inactive side 17 opposite to the active side 15, and comprises a plurality of gripper devices 13 which is mounted on the active side 15 of the conveying chain 9 and which, in use, constrains the sheet of packaging material 7 to the conveying chain 9. Preferably, the plurality of gripper devices 13 is configured to grasp an edge of the sheet of packaging material 7 pressing, near that edge, on two opposite faces of the sheet of packaging material 7. Advantageously, the gripper devices 13 are of the known type in which the clamping action is applied by a spring (see for example what is described in EP 1816075).

The conveying chain 9 is movable along a movement path which lies in a plane parallel to the longitudinal direction; preferably, that plane parallel to the longitudinal direction is vertical, as for example in the case of the embodiments illustrated.

The movement path comprises a first stretch and a second stretch which extend mainly in the longitudinal direction.

In some embodiments, the first stretch and the second stretch are parallel to the longitudinal direction and extend only in the longitudinal direction according to respective longitudinal extents (for example this is the case of the embodiments illustrated).

In some embodiments, one or each of the first stretch and the second stretch comprises a straight stretch inclined at an acute angle relative to the longitudinal direction.

In some embodiments, one or each of the first stretch and the second stretch is a straight stretch inclined at an acute angle of less than 45° relative to the longitudinal direction: in this case, the extent of the stretch in question (of the first stretch and/or of the second stretch) has a larger component in the longitudinal direction (corresponding to the longitudinal extent of the stretch in question) and, perpendicularly to the longitudinal direction (in the plane in which the movement path lies) a smaller component.

In some embodiments, one or each of the first stretch and the second stretch comprises a curved stretch which deviates from the longitudinal direction. As a whole, in any case, each of the first stretch and the second stretch extends mainly in the longitudinal direction according to a respective longitudinal extent, and is inscribable in a rectangle - lying in the same plane in which the movement path lies - having a pair of larger sides each with length equal to the respective longitudinal extent, and a pair of smaller sides each with length less than the respective longitudinal extent.

Along respectively the first stretch and the second stretch of the movement path, the conveying chain 9 is movable respectively according to a first direction of travel and a second direction of travel which is opposite to the first direction of travel. By way of example, with reference to those embodiments in which the longitudinal direction is horizontal, that means that, standing at the side of the chain conveyor 3 in such a way that the longitudinal direction corresponds to the right-left direction (equivalent to the left-right direction), the conveying chain 9 is movable from right to left along the first stretch and vice versa along the second stretch, or from right to left along the second stretch and vice versa along the first stretch.

In some embodiments, the chain conveyor 3 is configured in such a way that, in use, a part of the plurality of gripper devices 13 constrains the sheet of packaging material 7 to a plurality of links of the conveying chain 9 at the first stretch, and that the sheet of packaging material 7 is conveyed mainly along the longitudinal direction in accordance with the first direction of travel. Those embodiments include those illustrated in the accompanying figures.

In a different way, in some embodiments, the chain conveyor 3 is configured in such a way that, in use, part of the plurality of gripper devices 13 constrains the sheet of packaging material 7 to a plurality of links of the conveying chain 9 at the second stretch, and that the sheet of packaging material 7 is conveyed mainly along the longitudinal direction in accordance with the second direction of travel.

In addition to the conveying chain 9 and the plurality of gripper devices 13, the chain conveyor 3 also has a guiding unit 11 for the conveying chain 9, in particular to limit possible movements of the conveying chain 9 transversally to the longitudinal direction when it travels along the first stretch and the second stretch of the movement path. Advantageously, the chain conveyor 3 also comprises one or more pulleys (not illustrated since they are of the known type) for guiding the conveying chain 9 in one or more stretches of the movement path different from the first stretch and from the second stretch. Advantageously, the chain conveyor 3 also comprises at least one motor unit (not illustrated since it is of the known type) which, in use, starts and maintains the movement of the conveying chain 9 along the movement path. The above-mentioned guiding unit 11 comprises a supporting member 19, an upper member 21 and a lower member 23, all three extending mainly in the longitudinal direction, and a plurality of connecting elements 25 by means of which the supporting member 19, which is placed between the upper member 21 and the lower member 23, supports the upper member 21 and the lower member 23; the guiding unit 11 is mounted on the frame 5 by means of a plurality of spacers 27, which connects the frame 5 to the supporting member 19. Therefore, the supporting member 19 is "supporting" in the sense that it is shaped and sized in order to perform a structural function of supporting itself and the upper member 21 and the lower member 23, which are connected to the supporting member 19 by means of the plurality of connecting elements 25.

The supporting member 19 and the upper member 21 between them delimit an upper guide 29 along which the conveying chain 9 is slidably constrained to the guiding unit 11 when it travels along the first stretch of the movement path. At that upper guide 29, the upper member 21 and the supporting member 19 respectively define a first grazing surface 31 and a second grazing surface 33 which, in use, are grazed by the conveying chain 9 when it travels along the first stretch of the movement path. In some embodiments, the first grazing surface 31 and the second grazing surface 33 comprise two respective surfaces directed towards each other which, in use, are grazed by the rollers of the conveying chain 9. In some embodiments, the first grazing surface 31 and the second grazing surface 33 comprise respective lateral surfaces which, in use, are grazed by the inner faces of the links of the conveying chain 9. In some embodiments, the longitudinal extent of the first stretch of the movement path corresponds to the entire extent of the upper guide 29 in the longitudinal direction.

Similarly, the supporting member 19 and the lower member 23 between them delimit a lower guide 35 along which the conveying chain 9 is slidably constrained to the guiding unit 11 when it travels along the second stretch of the movement path. At that lower guide 35, the supporting member 19 and the lower member 23 respectively define a third grazing surface 37 and a fourth grazing surface 39 which, in use, are grazed by the conveying chain 9 when it travels along the second stretch of the movement path. In some embodiments, the third grazing surface 37 and the fourth grazing surface 39 comprise two respective surfaces directed towards each other which, in use, are grazed by the rollers of the conveying chain 9. In some embodiments, the third grazing surface 37 and the fourth grazing surface 39 comprise respective lateral surfaces which, in use, are grazed by the inner faces of the links of the conveying chain 9. In some embodiments, the longitudinal extent of the second stretch of the movement path corresponds to the entire extent of the lower guide 35 in the longitudinal direction.

In some embodiments, at least one of the supporting member 19, the upper member 21 and the lower member 23 is entirely made of (structural) stainless steel.

In some embodiments, at least one (preferably each) of the supporting member 19, the upper member 21 and the lower member 23 comprises a respective main portion 41 which, advantageously, is made of (structural) stainless steel.

In some embodiments (such as for example those illustrated), the upper member 21 comprises its respective main portion 41 - that is to say, an upper main portion - and a first secondary portion (different from the upper main portion) which defines the first grazing surface 31 and which, advantageously, is made of a steel treated with anti-wear treatment or, alternatively, of an anti-friction material.

In some embodiments, the supporting member 19 comprises its respective main portion 41, that is to say, a supporting main portion. In some embodiments (such as for example those illustrated), the supporting member 19 comprises a second secondary portion (different from the supporting main portion) which defines the second grazing surface 33 and which, advantageously, is made of a steel treated with anti-wear treatment or, alternatively, of an anti-friction material. In some embodiments (such as for example those illustrated), the supporting member 19 comprises a third secondary portion (different from the supporting main portion) which defines the third grazing surface 37 and which, advantageously, is made of a steel treated with anti-wear treatment or, alternatively, of an anti-friction material. In some embodiments (such as for example those illustrated), the lower member 23 comprises its respective main portion 41 - that is to say, a lower main portion - and a fourth secondary portion (different from the lower main portion) which defines the fourth grazing surface 39 and which, advantageously, is made of a steel treated with anti-wear treatment or, alternatively, of an anti-friction material.

In some embodiments, the steel treated with anti-wear treatment is steel coated with a coating material with high hardness: in some embodiments, that coating material is a metal material, such as for example chrome advantageously applied by means of chrome galvanic plating; in some embodiments, that coating material is a ceramic material, such as for example a titanium nitride-based material (TiN) applied by means of Physical Vapor Deposition, or a ceramic material applied by means of Thermal Spraying, or a polymeric material applied by means of spraying and then cured using ultraviolet irradiation.

Advantageously, each secondary portion, where provided, can be disassembled from the respective main portion 41 of the member (upper, supporting or lower) to which it belongs.

The supporting member 19, the upper member 21 and the lower member 23 together have a total extent which, in some embodiments, is mainly planar, that is to say, mainly lies in one plane (the plane in which the movement path of the conveying chain 9 lies). Preferably, the total extent is substantially that of a plate, having a maximum thickness which - advantageously - is less than a width of the conveying chain 9 (defined, between the active side 15 and the inactive side 17, in a direction perpendicular to the plane in which the movement path lies).

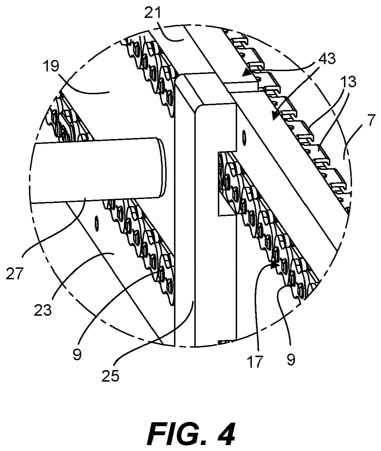

In some embodiments, the supporting member 19, the upper member 21 and the lower member 23 - considered collectively - are divided in the longitudinal direction into a plurality of longitudinal sections 43 (that is to say, into a plurality of longitudinal stretches) aligned one after another in the longitudinal direction. Advantageously, at least two adjacent longitudinal sections 43 of that plurality of longitudinal sections 43 are connected to each other by one of the connecting elements 25 (Figure 4).

The guiding unit 11 has an inner side 45, at which the active side 15 of the conveying chain 9 (the side on which the plurality of gripper devices 13 is mounted) is positioned, and an outer side 47, which is opposite to the inner side 45 and at which the inactive side 17 of the conveying chain 9 is positioned.

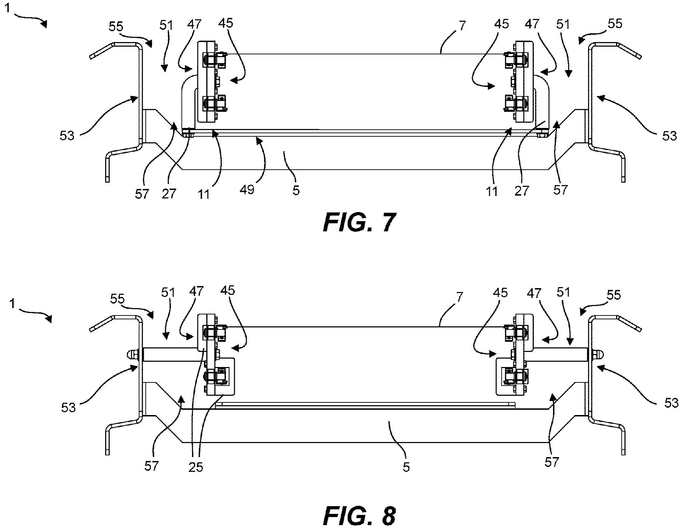

In some embodiments, at least one of the connecting elements 25 (preferably each) connects the supporting member 19 both to the upper member 21 and to the lower member 23, is positioned on the outer side 47 and, preferably, is E-shaped (such as for example in the embodiments illustrated in Figures 1 and 7).

In some embodiments, the plurality of connecting elements 25 comprises one or more elements which connect the supporting member 19 to the upper member 21 but not to the lower member 23, and/or one or more elements which connect the supporting member 19 to the lower member 23 but not to the upper member 21. Preferably, at least one of the connecting elements 25 which connect the supporting member 19 to one of either the upper member 21 or the lower member 23 is C-shaped (or has the shape of a reclining U); in some embodiments, such as for example in the embodiment illustrated in Figure 8, each connecting element 25 is C-shaped.

In some cases, the plurality of connecting elements 25 is positioned at the outer side 47 of the guiding unit 11. Those cases include for example those embodiments in which each connecting element 25 connects the supporting member 19 both to the upper member 21 and to the lower member 23: in fact, if even only partly positioned at the inner side 45, the plurality of connecting elements 25 would be a hindrance (would prevent) conveying of the sheet of packaging material 7 at the inner side 45.

In other cases, the plurality of connecting elements 25 is partly positioned at the outer side 47 and partly at the inner side 45. For example, in some embodiments, the chain conveyor 3 is configured to convey the sheet of packaging material 7 by means of a portion of the conveying chain 9 constrained to the upper guide 29 (and not by means of a portion of the conveying chain 9 constrained to the lower guide 35), and at least one of the connecting elements 25 connects the supporting member 19 only to the lower member 23 (not to the upper member 21) and is positioned at the inner side 45, not forming an obstacle to conveying of the sheet of packaging material 7 near the upper guide 29; this is the case, for example, of the embodiment illustrated in Figure 8.

Similarly, in other embodiments, the chain conveyor 3 is configured to convey the sheet of packaging material 7 by means of a portion of the conveying chain 9 constrained to the lower guide 35 (and not by means of a portion of the conveying chain 9 constrained to the upper guide 29), and at least one of the connecting elements 25 is positioned at the inner side 45 and connects the supporting member 19 only to the upper member 21 (not to the lower member 23), not forming an obstacle to conveying of the sheet of packaging material 7 near the lower guide 35.

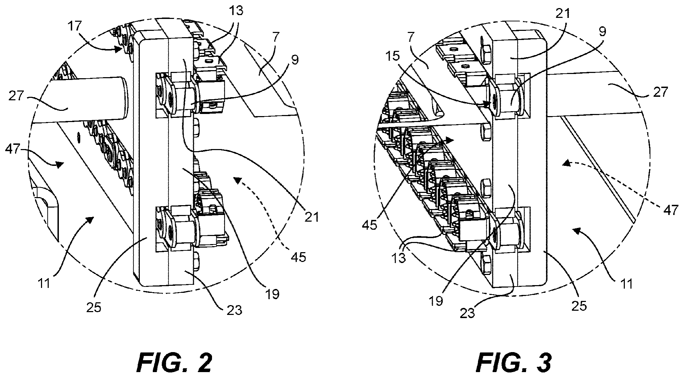

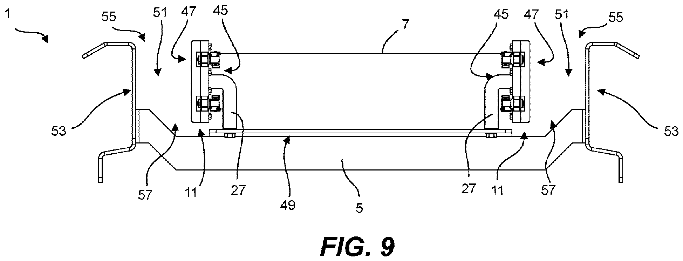

In some embodiments, the plurality of spacers 27 is mounted on the guiding unit 11 at the outer side 47 (Figures 1 to 8). In some embodiments, in a different way, the plurality of spacers 27 is mounted on the guiding unit 11 at least partly at the inner side 45, without hindering the conveying of the sheet of packaging material 7 (Figure 9).

In some embodiments, such as for example those illustrated in the accompanying figures, the plurality of spacers 27 is mounted directly on the supporting member 19. In some embodiments, in a different way, at least one of the spacers 27 is mounted on a respective connecting element 25 (of the plurality of connecting elements 25) which connects the supporting member 19 to the upper member 21 and/or to the lower member 23; however, not all of the connecting elements 25 are connected to a spacer 27.

Preferably, the spacers 27 are shaped like elongate elements (elements whose length dimensions are greater than their transversal dimensions) straight or bent: in some embodiments, for example, they are I-shaped; in other embodiments, for example, they are L-shaped.

In some embodiments, at least one spacer 27 of the plurality of spacers 27 is mounted on a lower portion 49 of the frame 5 which is positioned below the guiding unit 11 (Figures 7 and 9).

In some embodiments, the outer side 47 of the guiding unit 11 is exposed on an access space 51 which, perpendicularly to the longitudinal direction, is free of the plurality of spacers 27 for a predetermined percentage of a total length of the guiding unit 11 (component in the longitudinal direction of the total extent of the guiding unit 11). Advantageously, that predetermined percentage is equal to at least 50%, preferably to at least 70%, even more preferably to at least 90%. If the plurality of spacers 27 is mounted on the inner side 45 of the guiding unit 11, that predetermined percentage is advantageously equal to 100%. Preferably, where it is free of the plurality of spacers 27, the access space 51 is clear of any spacer 27 at least in one direction perpendicular to the longitudinal direction (preferably, in any direction perpendicular to the longitudinal direction): that is to say, there are no straight lines which, at the same time, have that direction perpendicular to the longitudinal direction (or preferably, any direction perpendicular to the longitudinal direction), intersect one or more of the spacers 27, and are incident on the outer side 47 of the guiding unit 11.

In some embodiments of the apparatus 1, the outer side 47 of the guiding unit 11 corresponds to a side of the apparatus 1 exposed on a space outside the apparatus 1 (corresponding to the access space 51).

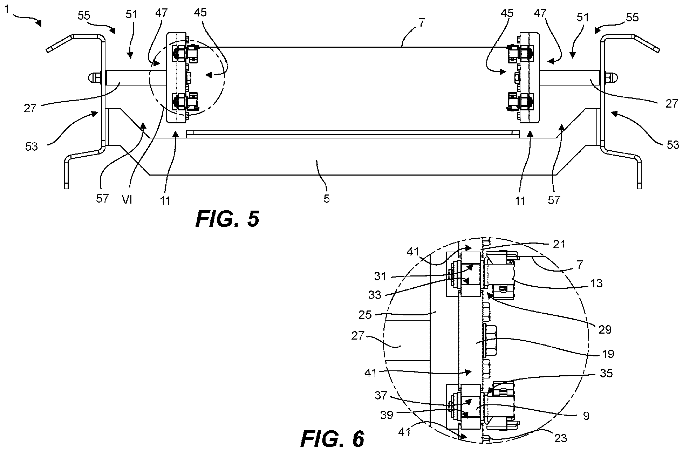

In some embodiments, in a different way, the access space 51 is included between the outer side 47 of the guiding unit 11 and a covering portion 53 of the apparatus 1 which extends in the longitudinal direction and which laterally covers the outer side 47 of the guiding unit 11 and the inactive side 17 of the conveying chain 9 (at least the part of the conveying chain 9 slidably constrained to the upper guide 29 and to the lower guide 35 of the guiding unit 11). In some embodiments, that covering portion 53 is or comprises an openable door which guarantees accessibility to the outer side 47 of the guiding unit 11 and to the inactive side 17 of the conveying chain 9. In some embodiments, the covering portion 53 is a portion of the frame 5 on which at least one of the spacers 27 is mounted which, transversally to the longitudinal direction (preferably perpendicularly to the longitudinal direction), crosses the access space 51 (Figures 1 and 5). In some embodiments, the access space 51 has an upper opening 55 and/or a lower opening 57 which is/are delimited, on one side, by the covering portion 53, and on the other side, by the guiding unit 11.

In some embodiments, perpendicularly to the longitudinal direction, the covering portion 53 of the apparatus 1 and the outer side 47 of the guiding unit 11 are separated from each other by a distance greater than 6 cm and/or by a distance greater than half of the vertical extent of the guiding unit 11 (the component of the total extent of the guiding unit 11 in the vertical direction).

In some embodiments, the number of spacers 27 of the plurality of spacers 27 is less than or equal to the number of connecting elements 25 of the plurality of connecting elements 25 (in any case it is greater than or equal to two); preferably, it is less than or equal to half of the number of connecting elements 25. In other words, the number of connecting elements 25 of the plurality of connecting elements 25 is greater than or equal to the number of spacers 27 of the plurality of spacers 27, preferably greater than or equal to double the number of spacers 27.

In the longitudinal direction, in some embodiments, the spacers 27 of the plurality of spacers 27 are separated from each other by a longitudinal distance which is greater than or equal to five times the vertical extent of the guiding unit 11, preferably greater than or equal to ten times the vertical extent of the guiding unit 11.

In each embodiment, in any case, both at the inner side 45, and at the outer side 47 and perpendicularly to the longitudinal direction, the upper guide 29 is laterally free of the plurality of connecting elements 25 and of the plurality of spacers 27 for at least 50% of the longitudinal extent of the first stretch (for a cumulative length equal to at least 50% of that longitudinal extent), preferably for at least 70% of the longitudinal extent of the first stretch, even more preferably for at least 90% of the longitudinal extent of the first stretch (but in any case for less than 100% of the longitudinal extent of the first stretch at least at one of either the inner side 45 or the outer side 47). Advantageously, where it is free of the plurality of connecting elements 25, the upper guide 29 is laterally clear, of any connecting element 25 and of any spacer 27 in at least one direction perpendicular to the longitudinal direction (preferably, in any direction perpendicular to the longitudinal direction). Similarly, both at the inner side 45, and at the outer side 47 and perpendicularly to the longitudinal direction, the lower guide 35 is laterally free of the plurality of connecting elements 25 and of the plurality of spacers 27 for at least 50% of the longitudinal extent of the second stretch (for a cumulative length equal to at least 50% of that longitudinal extent), preferably for at least 70% of the longitudinal extent of the second stretch, even more preferably for at least 90% of the longitudinal extent of the second stretch (but in any case for less than 100% of the longitudinal extent of the second stretch at least at one of either the inner side 45 or the outer side 47). Preferably, where it is free of the plurality of connecting elements 25, the lower guide 35 is laterally clear of any connecting element 25 and of any spacer 27 in at least one direction perpendicular to the longitudinal direction (preferably, in any direction perpendicular to the longitudinal direction).

This invention has important advantages.

In fact, by means of this invention it was possible to obtain a packaging apparatus with simple construction and structured in such a way as to reduce the build-up of dirt and to facilitate cleaning operations at the chain conveyor. The invention described above may be modified and adapted in several ways without thereby departing from the scope of the inventive concept as defined in the independent claims.

All details may be substituted with other technically equivalent elements and the materials used, as well as the shapes and dimensions of the various components, may vary according to requirements.

## Claims

1. Packaging apparatus (1) comprising a frame (5) and a chain conveyor (3) which is mounted on the frame (5), extends in a longitudinal direction and is configured to convey, in use, a sheet of packaging material (7) mainly in the longitudinal direction, wherein:
the chain conveyor (3) comprises a conveying chain (9), a guiding unit (11) for the conveying chain (9), and a plurality of gripper devices (13) which is mounted on an active side (15) of the conveying chain (9) and which, in use, constrains the sheet of packaging material (7) to the conveying chain (9);
the conveying chain (9) is movable along a movement path which lies in a plane parallel to the longitudinal direction and which comprises a first stretch and a second stretch, the first stretch and the second stretch extending mainly in the longitudinal direction and the conveying chain (9) being movable, along the first stretch and the second stretch, respectively according to a first direction of travel and a second direction of travel which is opposite to the first direction of travel;
the guiding unit (11) comprises a supporting member (19), an upper member (21), a lower member (23) and a plurality of connecting elements (25), the supporting member (19) being placed between the upper member (21) and the lower member (23) and supporting the upper member (21) and the lower member (23) by means of the plurality of connecting elements (25), the guiding unit (11) being mounted on the frame (5) by means of a plurality of spacers (27) which connects the frame (5) to the supporting member (19);
the supporting member (19), the upper member (21) and the lower member (23) extend mainly in the longitudinal direction, the supporting member (19) and the upper member (21) between them delimiting an upper guide (29), the supporting member (19) and the lower member (23) between them delimiting a lower guide (35), the conveying chain (9) being slidably constrained to the guiding unit (11) along the upper guide (29) when it travels along the first stretch of the movement path and along the lower guide (35) when it travels along the second stretch of the movement path;
the guiding unit (11) has an inner side (45), at which the active side (15) of the conveying chain (9) is positioned, and an outer side (47), which is opposite to the inner side (45) and at which an inactive side (17) of the conveying chain (9), opposite to the active side (15), is positioned;
the upper guide (29) is, perpendicularly to the longitudinal direction, laterally free of the plurality of connecting elements (25) and of the plurality of spacers (27) for at least 50% of a longitudinal extent of the first stretch, both at the inner side (45), and at the outer side (47); and
the lower guide (35) is, perpendicularly to the longitudinal direction, laterally free of the plurality of connecting elements (25) and of the plurality of spacers (27) for at least 50% of a longitudinal extent of the second stretch, both at the inner side (45), and at the outer side (47).

2. The apparatus (1) according to claim 1, wherein the longitudinal extent of the first stretch corresponds to an entire extent of the upper guide (29) in the longitudinal direction and wherein the longitudinal extent of the second stretch corresponds to an entire extent of the lower guide (35) in the longitudinal direction.

3. The apparatus (1) according to claim 1 or 2, wherein the outer side (47) of the guiding unit (11) is exposed on an access space (51) which, perpendicularly to the longitudinal direction, is free of the plurality of spacers (27) for at least 50% of a total length of the guiding unit (11).

4. The apparatus (1) according to claim 3, wherein the access space (51) is included between the outer side (47) of the guiding unit (11) and a covering portion (53) of the apparatus (1) which extends in the longitudinal direction and which laterally covers the outer side (47) of the guiding unit (11) and the inactive side (17) of the conveying chain (9).

5. The apparatus (1) according to claim 4, wherein, perpendicularly to the longitudinal direction, the covering portion (53) of the apparatus (1) and the outer side (47) of the guiding unit (11) are separated from each other by a distance greater than 6 cm and/or by a distance greater than half of a vertical extent of the guiding unit (11).

6. The apparatus (1) according to claim 4 or 5, wherein the covering portion (53) is a portion of the frame (5) on which at least one spacer (27) is mounted which is part of the plurality of spacers (27) and which crosses the access space (51) transversally to the longitudinal direction.

7. The apparatus (1) according to any one of claims 1 to 6, wherein at least one spacer (27) of the plurality of spacers (27) is mounted on a lower portion (49) of the frame (5), said lower portion (49) being positioned below the guiding unit (11).

8. The apparatus (1) according to any one of claims 1 to 7, wherein the number of connecting elements (25) of the plurality of connecting elements (25) is greater than or equal to the number of spacers (27) of the plurality of spacers (27), preferably greater than double the number of spacers (27).

9. The apparatus (1) according to any one of claims 1 to 8, wherein, in the longitudinal direction, the spacers (27) of the plurality of spacers (27) are separated from each other by a longitudinal distance which is greater than or equal to five times a vertical extent of the guiding unit (11), preferably greater than or equal to ten times said vertical extent of the guiding unit (11).

10. The apparatus (1) according to any one of claims 1 to 9, wherein at least one connecting element (25) is C-shaped and connects the supporting member (19) to the upper member (21) or to the lower member (23), and/or wherein at least one connecting element (25) is E-shaped and connects the supporting member (19) both to the upper member (21) and to the lower member (23).

11. The apparatus (1) according to any one of claims 1 to 10, wherein the supporting member (19), the upper member (21) and the lower member (23) together have a total extent which is mainly planar.

12. The apparatus (1) according to any one of claims 1 to 11, wherein the supporting member (19), the upper member (21) and the lower member (23) are divided into a plurality of longitudinal sections (43) aligned in the longitudinal direction and adjacent to each other, and wherein at least two adjacent longitudinal sections (43) of said plurality of longitudinal sections (43) are connected to each other by a connecting element (25) of the plurality of connecting elements (25).

13. The apparatus (1) according to any one of claims 1 to 12, wherein:
the upper member (21), the lower member (23) and the supporting member (19) each comprise a respective main portion (41) made of stainless steel;
the upper member (21) defines a first grazing surface (31) at the upper guide (29), the supporting member (19) defines a second grazing surface (33) at the upper guide (29) and a third grazing surface (37) at the lower guide (35), and the lower member (23) defines a fourth grazing surface (39) at the lower guide (35);
at least one, of the first grazing surface (31), the second grazing surface (33), the third grazing surface (37) and the fourth grazing surface (39), is defined by a secondary portion different from the respective main portion (41) and is made of a steel treated with anti-wear treatment or, alternatively, of an anti-friction material.
